# EUROPEAN PATENT SPECIFICATION

(11) **EP 3 403 498 B1**
(45) Date of publication and mention of the grant of the patent: **13.04.2022**
(21) Application number: 18173132.4
(22) Date of filing: 18.05.2018
(51) Int. Cl.: A01M 23/00, A01M 23/30

(54) **RODENT STATION**
NAGETIER-STATION
STATION DE RONGEURS

(30) Priority: 19.05.2017 GB 201708092
(43) Date of publication of application: 21.11.2018
(73) Proprietor: Pelsis Limited, Grimbald Crag Close Knaresborough North Yorkshire HG5 8PJ (GB)
(72) Inventor: ARDRON, Richard, Knaresborough, North Yorkshire HG5 8PJ (GB); FISH, John, Knaresborough, North Yorkshire HG5 8PJ (GB)
(74) Representative: Appleyard Lees IP LLP

(56) References cited:
- WO-A2-2008/035304
- US-A- 1 349 177
- US-A- 1 511 123
- US-A1- 2006 053 682

## Description

The present invention relates to rodent stations.

Rodent stations are used to catch and eliminate rodents. Different types of rodent stations include mechanical traps, bait boxes or glue rodent stations. Mechanical traps typically use a spring mechanism which, when triggered, quickly kills the rodent.

Trap mechanisms may be built into the housing of a rodent station or may be removably inserted into a rodent station. Rodent traps may be single-use traps, or may be adapted to allow a user to remove the rodent and to reset the trap.

In conventional rodent stations, only one rodent may be caught in the rodent station at one time. A disadvantage arises from the use of conventional rodent stations in that the traps need to be regularly reset or replaced or several rodent stations may be required to be set to meet requirements in catching rodents.

US2006/053682 discloses a corner-fitting escape-proof repeating animal trap. WO2008/035304 discloses a versatile pest station with interchangeable inserts. US1511123 discloses a weasel trap. US1349177 discloses a cabinet trap.

According to the invention there is provided a rodent station housing adapted to hold a trap device in a plurality of different orientations. The housing is adapted to hold two trap devices and comprises two catching zones. The housing further comprises exterior side walls and at least one interior wall, the exterior side walls and at least one interior wall at least partially defining the two catching zones. Each catching zone is adapted to retain a trap device in a first orientation and a second orientation. In the first orientation, the catching zones are adapted to retain two trap devices in an end-to-end arrangement and in the second orientation the catching zones are adapted to retain two trap devices in a side-by-side arrangement.

An advantage of the housing being adapted to hold a trap device a plurality of different orientations is that a user may place a trap device in a desired position in the housing, according to a user preference or a particular application.

An advantage of providing a trap device in a housing is that it may reduce the likelihood of non-target species, for example cats or dogs, from being caught in the trap device.

The position of the trap device in the first orientation may be at an oblique angle relative to the position of the trap device in the second orientation. In use, the housing may be adapted to retain the trap device in one of the first orientation or the second orientation at one time. The position of the trap device when in the first orientation may be perpendicular to the position of the trap device when in the second orientation.

The housing may comprise a retaining means for releasably retaining a trap device in the housing. The retaining means may allow a trap device to be removed from the housing, providing the advantage that a user may reset the trap device and return the reset trap device to the housing. Alternatively, if the trap device is a single-use trap device, the user may replace a triggered trap device with a replacement trap device.

The housing may comprise a base and a lid. The housing may be a box.

Each catching zone may have a substantially L-shaped base area. The interior wall may be arranged relative to the side wall and the opening such that a rodent may enter the catching zone at a location comprising the trigger plate of the housing. The at least one interior wall may prevent a rodent from entering the catching zone from any other position than the location comprising the trigger plate of the housing.

The at least one interior wall and/or at least one side wall may function as the retaining means for releasably retaining the trap device in the first orientation or the second orientation.

The at least one interior wall may be upstanding from the base of the housing. The at least one interior wall may extend to approximately the same height from the base as the side walls.

The housing may comprise two interior walls. The shape of the two catching zones may be at least partially defined by the two interior walls and the side walls. The interior walls and a side wall may define a path from the first opening to the second opening. Each catching zone may comprise a retaining means for releasably retaining the trap device in the catching zone.

If the two trap devices are arranged in the first end-to-end orientation in use, a trigger plate of each trap device may be provided closer to the entry regions of the housing. This may result in rodents being caught more quickly. Furthermore, rodents are often able to jump over trap devices; however, if the trap devices are arranged in an end-to-end orientation, a rodent that jumps over the first trap device is more likely to be caught in the second trap device.

If the two trap devices are arranged in the second side-by-side orientation, the trigger plate of each trap device may be provided further from the entry regions of the housing than in the first orientation. This may reduce the likelihood of a non-target species being caught in or triggering a trap device.

It is therefore advantageous to provide a housing in which the trap devices may be positioned either in the first orientation or the second orientation according to the user's preference and application.

The lid may be removable from the housing. The lid may be pivotably attachable to a wall of the housing, such that the lid may be pivoted between open and closed positions in use. This is advantageous because it allows a user to access the interior of the housing. A user may open the lid to check if any trap devices have been triggered, and to remove and/or replace any triggered trap devices.

For a better understanding of the invention, and to show how embodiments of the same may be carried into effect, reference will now be made, by way of example, to the accompanying diagrammatic drawings, in which:
Figure 1 is a top plan view of a rodent trap housing retaining two trap devices in a first orientation; and
Figure 2 is a top plan view of the rodent trap housing of figure 1, retaining the trap devices in a second orientation.

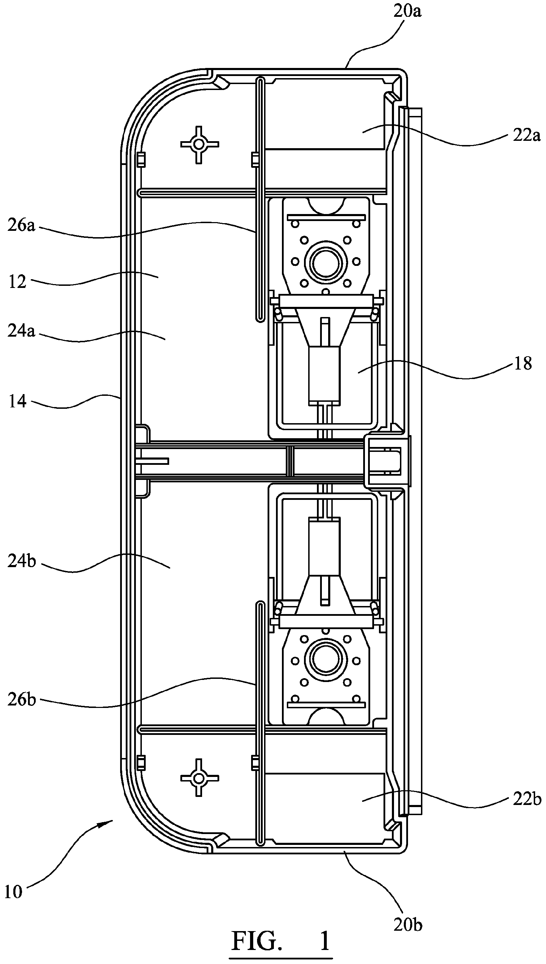

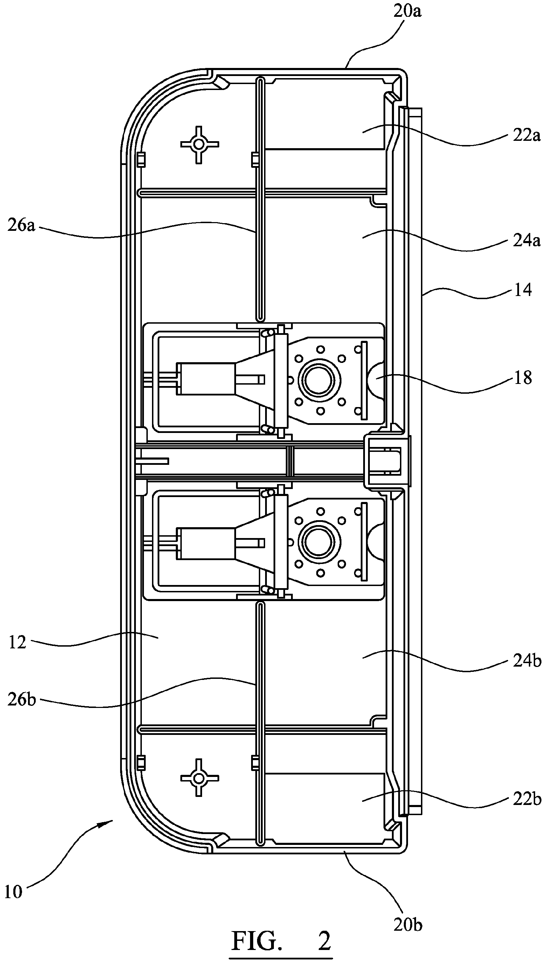

Figures 1 and 2 show a rodent trap housing 10 having a base 12 and side walls 14. The housing also comprises a lid, which has been removed in figures 1 and 2. The lid is removable from the housing 10 to provide access to the interior of the housing 10. A user may remove the lid to open the housing 10 to insert trap devices 18. When the trap devices 18 are set and in the desired locations, the lid may be replaced by the user.

The base 12 is substantially rectangular. As shown in figures 1 and 2, the housing 10 is adapted to hold two conventional rodent snap trap devices 18 at one time. A conventional rodent snap trap device comprises a rectangular base, a trigger plate arranged at one end of the base, and a spring-loaded trapping bar.

The housing 10 comprises two openings 20a, 20b provided on opposing side walls 14, for allowing rodents to enter the housing 10. The interior of the housing 10 comprises two entry regions 22a, 22b and two catching zones 24a, 24b. Each entry region 22a, 22b is adjacent an opening 20a, 20b. Each catching zone 24a, 24b is adapted to hold one snap trap device 18, either in a first orientation, as shown in figure 1, or a second orientation, as shown in figure 2.

In the first orientation, as shown in figure 1, the snap trap devices 18 are oriented in the housing 10 in an end-to-end arrangement. In the second orientation, as shown in figure 2, the snap trap devices 18 are oriented in the housing 10 in a side-by-side arrangement.

The housing comprises two interior walls 26a, 26b. First and second interior walls 26a, 26b define paths from the first and second openings 20a, 20b to the first and second catching zones 24a, 2b respectively. A first interior wall 26a defines a path from the first opening 20a, through the entry region 22a, into the first catching zone 24a. A second interior wall 26b defines a path from the second opening 20b, through the second entry region 22b and into the second catching zone 24b.

The interior walls 26a, 26b direct a rodent towards a trigger plate end of a snap trap device 18 in the catching zones 24a, 24b and prevent the rodent from accessing the catching zones 24a, 24b at the other end of the snap trap device 18.

In the first orientation, trap devices 18 may be arranged parallel to the two interior walls 26a, 26b. In the second orientation, trap devices 18 may be arranged at the end of each interior wall 26a, 26b, perpendicular to the interior walls 26a, 26b. In the first orientation, a side wall 14 and the interior walls 26a, 26b act to retain the trap devices 18 in the desired position. In the second orientation, opposing side walls 14 at each end of the trap devices 18 act to retain the trap devices 18 in the desired position.

The length of the housing 10 from the first opening 20a to the second opening 20b is greater than the length of two trap devices in the end-to-end arrangement. The width of the interior of the housing 10 is approximately the length of one rodent trap device.

The base 12 is substantially flat and the interior walls 26a, 26b are upstanding from the base 12. The interior walls 26a, 26b extend from the base 12 towards the lid of the housing 10; the height of the interior walls 26a, 26b is approximately the height of the side walls 14.

If the trap device in the first catching zone 24a is not triggered, the rodent entering the first catching zone 24a from the first entry region 22a will be trapped in that trap device. If the trap device in the first catching zone 24a has been triggered, a rodent may then enter the second catching zone 24b from the first catching zone 24a, and may be trapped in a trap device in the second catching zone 24b. A rodent may also enter the second catching zone 24b from the second opening 20b.

## Claims

1. A housing (10) for a rodent station, the housing (10) being adapted to hold a trap device (18) in a plurality of different orientations,
wherein the housing (10) is adapted to hold two trap devices (18) and comprises two catching zones (24a, 24b), and
wherein the housing (10) further comprises exterior side walls (14) and at least one interior wall (26a, 26b), the exterior side walls (14) and at least one interior wall (26a, 26b) at least partially defining the two catching zones (24a, 24b),
the housing being **characterised by** each catching zone (24a, 24b) being adapted to retain a trap device (18) in a first orientation and a second orientation,
wherein in the first orientation, the catching zones (24a, 24b) are adapted to retain two trap devices (18) in an end-to-end arrangement and in the second orientation, the catching zones (24a, 24b) are adapted to retain two trap devices (18) in a side-by-side arrangement.

2. A housing (10) according to claim 1, wherein the housing (10) comprises a retaining means for releasably retaining a trap device (18) in the housing (10) in the first and second orientations.

3. A housing (10) according to claim 1, wherein each catching zone (24a, 24b) is substantially L-shaped.

4. A rodent station comprising a housing (10) according to any preceding claim and a trap device (18), wherein the trap device (18) is removably retainable in the housing (10) in a first orientation or a second orientation.

## Patentansprüche

1. Gehäuse (10) für eine Nagetierstation, wobei das Gehäuse (10) dazu ausgeführt ist, eine Fallenvorrichtung (18) in einer Vielzahl von verschiedenen Ausrichtungen zu halten,
wobei das Gehäuse (10) dazu ausgeführt ist, zwei Fallenvorrichtungen (18) zu halten, und zwei Fangzonen (24a, 24b) umfasst,
wobei das Gehäuse (10) ferner äußere Seitenwände (14) und mindestens eine Innenwand (26a, 26b) umfasst, wobei die äußeren Seitenwände (14) und mindestens eine Innenwand (26a, 26b) mindestens teilweise die beiden Fangzonen (24a, 24b) definieren,
wobei das Gehäuse **dadurch gekennzeichnet ist, dass** jede Fangzone (24a, 24b) dazu ausgeführt ist, eine Fallenvorrichtung (18) in einer ersten Ausrichtung und einer zweiten Ausrichtung festzuhalten,
wobei die Fangzonen (24a, 24b) in der ersten Ausrichtung dazu ausgeführt sind, zwei Fallenvorrichtungen (18) in einer Ende-an-Ende-Anordnung festzuhalten, und die Fangzonen (24a, 24b) in der zweiten Ausrichtung dazu ausgeführt sind, zwei Fallenvorrichtungen (18) in einer nebeneinander angeordneten Anordnung festzuhalten.

2. Gehäuse (10) nach Anspruch 1, wobei das Gehäuse (10) ein Festhaltemittel umfasst, um eine Fallenvorrichtung (18) in dem Gehäuse (10) in der ersten und der zweiten Ausrichtung freigebbar festzuhalten.

3. Gehäuse (10) nach Anspruch 1, wobei jede Fangzone (24a, 24b) im Wesentlichen L-förmig ist.

4. Nagetierstation, umfassend ein Gehäuse (10) nach einem der vorhergehenden Ansprüche und eine Fallenvorrichtung (18), wobei die Fallenvorrichtung (18) in dem Gehäuse (10) in einer ersten Ausrichtung oder einer zweiten Ausrichtung entfernbar festhaltbar ist.

## Revendications

1. Boîtier (10) pour un poste de capture de rongeurs, le boîtier (10) étant apte à contenir un dispositif de piège (18) dans une pluralité d'orientations différentes,
le boîtier (10) étant apte à contenir deux dispositifs de pièges (18) et comprenant deux zones de capture (24a, 24b), et
le boîtier (10) comprenant en outre des parois latérales extérieures (14) et au moins une paroi intérieure (26a, 26b), les parois latérales extérieures (14) et l'au moins une paroi intérieure (26a, 26b) définissant au moins partiellement les deux zones de capture (24a, 24b),
le boîtier étant **caractérisé en ce que** chaque zone de capture (24a, 24b) est apte à retenir un dispositif de piège (18) dans une première orientation et une seconde orientation,
les zones de capture (24a, 24b) étant, dans la première orientation, aptes à retenir deux dispositifs de pièges (18) disposés bout à bout, et les zones de capture (24a, 24b) étant, dans la seconde orientation, aptes à retenir deux dispositifs de pièges (18) disposés côte à côte.

2. Boîtier (10) selon la revendication 1, le boîtier (10) comprenant un moyen de retenue destiné à retenir de manière libérable un dispositif de piège (18) dans le boîtier (10) dans les première et seconde orientations.

3. Boîtier (10) selon la revendication 1, dans lequel chaque zone de capture (24a, 24b) présente essentiellement une forme en L.

4. Poste de capture de rongeurs comprenant un boîtier (10) selon l'une quelconque des revendications précédentes et un dispositif de piège (18), le dispositif de piège (18) pouvant être retenu de manière amovible dans le boîtier (10) dans une première orientation ou une seconde orientation.
